# EUROPÄISCHE PATENTANMELDUNG

(11) **EP 1 273 845 A1**
(43) Veröffentlichungstag der Anmeldung: **08.01.2003**
(21) Anmeldenummer: 02010397.4
(22) Anmeldetag: 08.05.2002
(51) Int. Cl.: F16L 55/10

(54) **Vorrichtung zum Einfrieren von flüssigkeitsgefüllten Rohrleitungen**

(30) Priorität: 15.05.2001 DE 10123722
(71) Anmelder: Rothenberger Werkzeuge Aktiengesellschaft, 65779 Kelkheim / Ts. (DE)
(72) Erfinder: Waltersdorf, Manfred, 61462 Königstein (DE)
(74) Vertreter: Zapfe, Hans, Dipl.-Ing.

(57) **Zusammenfassung**

Eine Vorrichtung zum Einfrieren von flüssigkeitsgefüllten Rohrleitungen (1) aus der Gruppe Heizungsrohre, Abzweigleitungen und Sanitärleitungen besitzt eine in Halbschalen (3, 4) geteilte Manschette (2), die eine Hauptkammer (5) mit beidendigen radial fluchtenden Wänden mit mittigen Ausnehmungen aufweist, durch die die Rohrleitung (1) hindurchführbar ist, wobei die Hauptkammer (5) mit mindestens einer Eintrittsöffnung für ein verdampfbares Kältemittel versehen ist und wobei die Wände gegenüber der Rohrleitung (1) mit Mitteln für die Leitung des aus der Hauptkammer (5) austretenden verdampften Kältemittels über die Oberfläche der Rohrleitung (1) versehen sind. Zur Verbesserung des Wirkungsgrades hinsichtlich Zeit und Kältemittelverbrauch auch bei heißem Inhalt der Rohrleitung (1) werden zwei Lösungen vorgeschlagen, die auch miteinander kombinierbar sind: Einmal ist die Manschette (2) an mindestens einem Ende der Hauptkammer (5) mit einer Endkammer (6, 7) versehen, durch die das an dem zugehörigen Ende der Hauptkammer (5) austretende verdampfte Kältemittel in Berührung mit der Rohrleitung (1) hindurchführbar ist. Zum andern ist die Hauptkammer für den Eintritt von flüssigem Kältemittel mit auf den Umfang verteilten Düsen mit Düsenmündungen versehen, die in einem geringen Abstand von 1 bis 10 mm auf die Rohrleitung (1) ausgerichtet sind. Als Kältemittel wird flüssiges Kohlendioxid verwendet, das nicht brennbar ist und in Druckgasflaschen ohne Kühlung transportiert und gelagert werden kann.

## Beschreibung

Die Erfindung betriff eine Vorrichtung zum Einfrieren von flüssigkeitsgefüllten Rohrleitungen nach den Oberbegriffen der Patentansprüche 1 und 6.

Es handelt sich nicht um das Einfrieren von Pipe-Lines, die eine Länge von tausenden von Kilometern und Durchmesser von 150 cm und darüber haben können, sondern um Rohrleitungen aus der Gruppe Heizungsrohre, Fernwärmeleitungen, Abzweigleitungen und Sanitärleitungen, die in der Regel mit Wasser gefüllt sind, durch Ausbildung eines standfesten Eispfropfens, um an den Rohrleitungen Reparaturen, Austausch- und Wartungsarbeiten durchführen zu können. Solche Rohrleitungen haben einen Durchmesser von maximal 25 cm, in der Regel von 1 bis 8 Zoll.

Das früher teilweise übliche Einfrieren durch Kohlenwasserstoffe, die bei Raumtemperatur unter Druck in Druckgasflaschen gehalten werden können und der Rohrleitung durch Verdampfen Wärme entziehen, wurde aus Sicherheitsgründen aufgegeben, weil solche Dämpfe gesundheitsschädlich und brennbar sind und bei mangelnder Entlüftung zu Verpuffungen und Explosionen führen können. Beispiele hierführ sind z.B. Gase, wie sie für Grillgeräte und zum Füllen von Feuerzeugen verwendet werden können, bei denen aber die Verbrennung gewollt ist.

Für das Einfrieren der besagten Rohrleitungen hat sich auch flüssiger Stickstoff nicht bewährt. Flüssiger Stickstoff hat einen kritischen Druck von 33,83 bar und eine kritische Temperatur von -147,1 °C. Dies besagt, daß flüssiger Stickstoff nur in Isolierbehältern bei Temperaturen unterhalb von -147,1 °C transportiert und gelagert werden kann. Der Transport, die Lagerung und das Umfüllen in die Einfriervorrichtung sind daher kompliziert und kostenintensiv, insbesondere durch Investitions- und Personalkosten. Ohne besondere Maßnahmen ist auch der thermische Wirkungsgrad schlecht.

Durch die EP 0 584 686 B1 ist es bekannt, zum Einfrieren von Rohrleitungen Kohlendioxid und relativ kurze, aus Halbschalen zusammengesetzte Manschetten mit einer einzigen Kammer zu verwenden, die an den Durchführungsöffnungen für die Rohrleitung elastomere Lippendichtungen aufweisen, die sich unter dem Druck des vergasten Kältemittels nach außen verformen, so das das abströmende Kältemittel noch über eine gewisse Wegstrecke über die Oberfläche der Rohrleitung strömt. Obwohl sich dadurch der Wirkungsgrad des Einfriervorgangs, bezogen auf Zeit und Kältemittelverbrauch, erheblich verbessert hat, ist die Wirkung begrenzt, weil der Strömungsverlauf des Kältemittels nach Verlassen der Dichtlippen nicht mehr gezielt beeinflußt werden kann. Strömungen der Umgebungsluft, insbesondere beim Arbeiten im Freien, beeinträchtigen die Wirkung des entwichenen Kältemittels. Auf die vorteilhaften Eigenschaften und Wirkungen von Kohlendioxid wird weiter unten noch ausführlich eingegangen.

Der nachstehend genannte Stand der Technik bezieht sich auf das gattungsfremde Einfrieren von Wasser in Pipe-Lines mit anderen Kältemitteln:

Durch die US 3 695 301 ist es zum Zwecke von Druckprüfungen bekannt, den Inhalt begrenzter Längen von flüssigkeitsgefüllten Pipe-Lines dadurch einzufrieren daß man sie mit einer Manschette aus zwei Halbschalen umgibt, die zuvor mit festem Kohlendioxid, sogenanntem Kohlensäureschnee, gefüllt wurde, und daß man diese Füllung von einem Kreislauf eines flüssigen Kältemittels aus der Gruppe Kalziumchlorid-Lösung, Alkohol und Azeton durchströmen läßt. Alkohol und Azeton sind brennbar, ihre Dämpfe explosiv. Das Innere der Halbschalen ist mit Schikanen, sog. "Baffles", versehen, um die Flüssigkeit möglichst nahe an die Pipe-Line heran zu bringen. Die halbringförmigen Schikanen sind jedoch in Achsrichtung versetzt angeordnet, so daß keine einzelnen Kammern gebildet werden und Strömungskurzschlüsse möglich und wahrscheinlich sind. Die Flüssigkeit wird an einem Ende in die Manschette eingeführt und aus dieser am entgegengesetzten Ende wieder abgeführt. Dadurch ist der Wirkungsgrad dieser bekannten Vorrichtung begrenzt. Es wird daher als notwendig angegeben, daß in die Pipe-Line an die einzufrierende Stelle abgedichtet ein zylindrischer Verschlußkörper nach Art eines "Rohrmolches" eingeführt wird, um ein möglichst geringes Volumen des einzufrierenden Rohrinhalts abzugrenzen. Für die Einführung solcher Rohrmolche sind Pipe-Lines gewöhnlich mit speziellen Schleusen ausgestattet. Die Position des Rohrmolches muß mittels eines Senders und Radiowellen genau bestimmt und in übereinstimmung mit der Lage der Manschette gebracht werden. Bei Heizungs- und Fernwärmeleitungen mit engen Durchmessern und Rohrbögen können solche Rohrmolche jedoch nicht eingesetzt werden, zumal es auch an Schleusen hierfür fehlt. Solche komplexen und voluminösen Vorrichtungen sind beispielsweise als "Handwerkergepäck" weder vorgesehen noch geeignet.

Durch die US 4 112 706 ist eine ähnliche Vorrichtung für Druckprüfungen bekannt, bei der gleichfalls ein in der Länge durch zwei Rohrmolche begrenzter Abschnitt einer Pipe-Line durch eine zweiteilige Kältemanschette eingefroren wird. Als Durchmesser der Pipe-Line sind beispielhaft ca. 150 cm angegeben. In diesem Fall wird flüssiger Stickstoff als Kältemittel in die Manschette eingeleitet und durch Blasen gleichzeitig eingeleiteten gasförmigen Stickstoffs in Bewegung gehalten, der radial auf die Pipe-Line ausgerichtet ist. Hierfür sind in der Kältemanschette Gasverteiler angeordnet, die aus einer Vielzahl halbkreisförmiger Rohrbögen bestehen, die an diametral gegenüber liegenden Stellen mit achsparallelen Gasleitungen verbunden sind. Die Rohrbögen sind gleichfalls in Achsrichtung gegeneinander versetzt angeordnet und bilden innerhalb der Manschette keine Kammern. Dies ist schon deshalb unmöglich, weil die axial durchgehenden Gasleitungen der Kammerbildung entgegen stehen. Zur Verbesserung des thermischen Wirkungsgrades sind zwei Maßnahmen vorgesehen: Einmal wird die Pipeline vor dem Schließen der Manschette mit einem saugfähigen Material umgeben, zum andern kann der Stickstoff auch an den Enden der Manschette durch Dichtlippen austreten und über die Pipe-Line strömen, um diese zusätzlich zu kühlen. Hierbei tritt aber unvermeidbar auch flüssiger Stickstoff mit aus, der dann für Kühlzwecke nicht mehr zu Verfügung steht. Der bauliche Aufwand ist beträchtlich und für das Einfrieren häuslicher Rohrleitungen mit geringen Durchmessern weder vorgesehen noch geeignet. Auch in diesem Falle gilt: Bei Heizungs- und Fernwärmeleitungen mit engen Durchmessern und Rohrbögen können solche Rohrmolche nicht eingesetzt werden, zumal es auch an Schleusen hierfür fehlt. Solche komplexen und voluminösen Vorrichtungen sind beispielsweise als "Handwerkergepäck" weder vorgesehen noch geeignet und auch umständlich zu montieren.

Der Erfindung liegt daher die Aufgabe zugrunde, eine Vorrichtung der eingangs beschriebenen Gattung dahingehend zu verbessern, daß der Wirkungsgrad des Einfriervorgangs, bezogen auf Zeit und Kältemittelverbrauch, noch weiter erhöht wird, daß die Vorrichtung auch für größere Leitungsdurchmesser eingesetzt werden kann und daß dem Wärmeeinfluß von Restströmungen des Leitungsinhalts auf die Ausbildung und Aufrechterhaltung eines Verschlußstopfens in der Rohrleitung, bei Wasser eines "Eisstopfens", so weit wie irgend möglich entgegen gewirkt wird. Es geht im Prinzip auch darum, die Sicherheit des Rohrverschlusses durch Erhöhung der "Standzeit" des Verschlußstopfens ohne übermäßigen Kältemittelverbrauch zu erhöhen und den Einfluß von Strömungen der Umgebungsluft so weit wie möglich auszuschalten.

Die Lösung der gestellten Aufgabe erfolgt bei der eingangs angegebenen Vorrichtung erfindungsgemäß durch die Merkmale in den Kennzeichen der Patentansprüche 1 und 6, die auch miteinander kombiniert werden können. Mit der Erfindung wird die gestellte Aufgabe in vollem Umfange gelöst. Insbesondere wird eine Vorrichtung der eingangs beschriebenen Gattung dahingehend verbessert, daß der Wirkungsgrad des Einfriervorgangs, bezogen auf Zeit und Kältemittelverbrauch, noch weiter erhöht wird, daß die Vorrichtung auch für Leitungsdurchmesser bis ca. 25 cm eingesetzt werden kann und daß dem Wärmeeinfluß von Restströmungen des Leitungsinhalts auf die Ausbildung und Aufrechterhaltung eines Verschlußstopfens in der Rohrleitung, bei Wasser eines "Eisstopfens", so weit wie irgend möglich entgegen gewirkt wird. Es wird erreicht, daß die Sicherheit des Rohrverschlusses durch Erhöhung der "Standzeit" des Verschlußstopfens ohne übermäßigen Kältemittelverbrauch erhöht wird und das der Einfluß von Strömungen der Umgebungsluft so weit wie möglich ausgeschaltet wird. Es wurde überraschend gefunden, daß damit auch Rohrleitungen zuverlässig eingefroren werden konnten, die anfänglich mit stehendem Heißwasser bis zum Siedepunkt bei Normaldruck (100 °C), ja sogar bis 120 °C, gefüllt waren, wobei ein Eisstopfen ausreichender Länge und Standzeit mit einer Temperatur von -20 °C gebildet wurde.

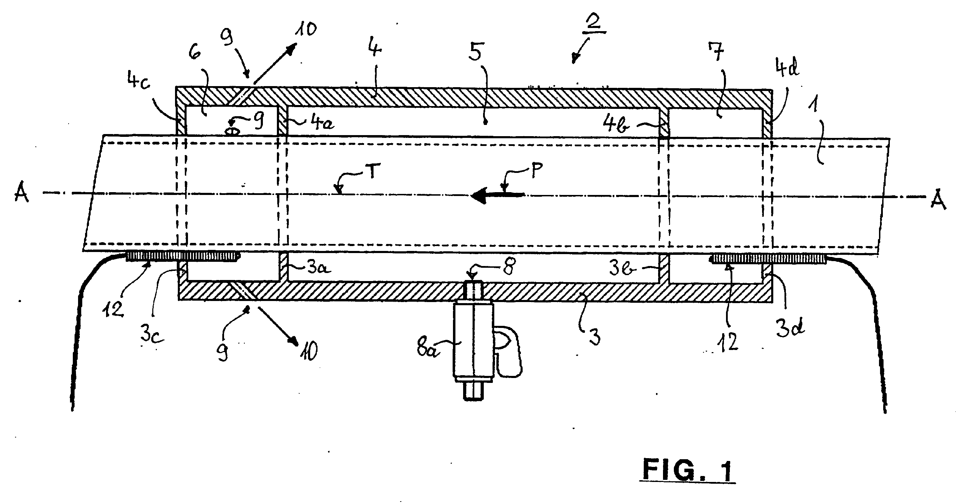

Beispielsweise konnte mit der Ausführungsform nach Figur 1 eine Rohrleitung mit einem Nenndurchmesser von einem Zoll bei einer Wassertemperatur von 96 °C mittels 30 kg flüssigen Kohlendioxids innerhalb von 18 Minuten zuverlässig eingefroren werden. Der Eispfropfen hielt auch dann dem Wasserdruck stand, wenn die Rohrleitung auf einer Seite mittels eines Brenners auf eine Wassertemperatur von gleichfalls 96 °C aufgeheizt wurde. Der Eispfropfen hielt auch ohne weitere Zugabe von Kohlendioxid für eine Dauer von mehr als 22 Minuten. Der Eispfropfen löste sich erst dann, wenn die den Eispfropfen unmittelbar umgebende Rohrwandung eine Temperatur von +42 °C erreicht hatte.

Weitere, besonders vorteilhafte Ausgestaltungen der Erfindung, die entweder einzeln oder in Kombination angewandt werden können, sind den Unteransprüchen, der Beschreibung und den Zeichnungen zu entnehmen.

Zwei Ausführungsbeispiele des Erfindungsgegenstandes und deren Wirkungsweise und Vorteile werden nachfolgend anhand der Figuren 1 bis 15 näher erläutert.

Es zeigen:
- Figur 1: einen Axialschnitt durch ein erstes Ausführungsbeispiel einer Manschette mit einem eingeschlossenen Abschnitt einer Rohrleitung,
- Figur 2: die beiden Hälften der Manschette nach Figur 1 in abgehobenem Zustand,
- Figur 3: die untere Hälfte der Manschette nach Figur 2, vereinfacht und in Richtung des Pfeils III in Figur 2 gesehen,
- Figur 4: oben: eine stirnseitige Ansicht der oberen Hälfte der Manschette nach Figur 2 in Richtung des Pfeils IV in Figur 2; unten: einen Schnitt durch die untere Hälfte der Manschette einlang der Linie IVa-IVa in Figur 2,
- Figur 5: einen Teilschnitt durch die untere Hälfte der Manschette entlang der Linie V-V in Figur 4 in Verbindung mit einem Ausschnitt aus einer eingeschlossenen Rohrleitung,
- Figur 6: eine stirnseitige Ansicht der unteren Hälfte der Manschette nach Figur 3 in Richtung des Pfeils VI in Figur 3,
- Figur 7: einen Schnitt durch die untere Hälfte der Manschette entlang der Linie VII-VII in Figur 2,
- Figur 8: den Ausschnitt aus dem Kreis VIII in Figur 7 in vergrößertem Maßstab,
- Figur 9: eine stirnseitige Ansicht zweier Einsatzstücke für die inneren radialen Trennwände der Manschette nach Figur 1,
- Figur 10: einen mittigen Axialschnitt durch die Einsatzstücke nach Figur 10,
- Figur 11: eine stirnseitige Ansicht zweier Einsatzstücke für die radialen Außenwände der Manschetten nach den Figuren 1 und 9,
- Figur 12: einen mittigen Axialschnitt durch die Einsatzstücke nach Figur 11,
- Figur 13: einen Axialschnitt durch ein zweites Ausführungsbeispiel der Erfindung mit einer Manschette, die eine separate Hauptkammer und zwei angesetzte und abnehmbare Endkammern besitzt,
- Figur 14: eine axiale Explosionsdarstellung des Gegenstandes nach Figur 13 und
- Figur 15: einen teilweisen Radialschnitt durch den Gegenstand von Figur 13 entlang der Linie XV-XV in Figur 13 in Verbindung mit einer radial wirkenden Spannvorrichtung.

In Figur 1 ist ein Abschnitt einer Rohrleitung 1 dargestellt, die zum Zwecke des lokalen Einfrierens ihres flüssigen Inhalts, zumeist Wasser, an einer bestimmten Stelle auf Temperaturen unterhalb des Gefrierpunktes abgekühlt werden soll. Dadurch soll vermieden werden, daß das gesamte Leitungssystem ab einem ggf. entfernt angeordneten Absperrventil entleert werden muß. Dieses Prinzip ist z.B. zum Austausch oder zur Reparatur von Heizkörpern und/oder Heizkesseln und/oder Absperrschiebern bekannt, wobei vor und hinter dem Heizkörper je eine Einfriervorrichtung angeordnet wird. Da der Heizkörper jedoch üblicherweise ein Regel- oder Absperrventil besitzt, kann der Wasserkreislauf für den betreffenden Heizkörper zum Stillstand gebracht werden, bevor der Heizkörper und/oder sein Absperrventil ausgebaut wird. Der durch das Einfrieren gebildete "Eispfropfen" verhindert eine ungewollte Entleerung des übrigen Leitungs- und Behältersystems.

Sehr viel schwieriger gestaltet sich jedoch der Vorgang, wenn es sich um das Einfrieren einer Abzweigleitung einer in der Nähe verlaufenden Fernwärme-Leitung handelt, in der die Strömung nicht zum Stillstand gebracht werden kann, wie z.B. bei Abzweigleitungen, an denen Schweißarbeiten ausgeführt werden sollen. Strömungen aus der Hauptleitung können dazu führen, daß ein "Eispfropfen" in der Abzweigleitung nicht gebildet werden kann oder wieder Auftaut, bevor die Schweißarbeiten beendet sind. Aus Sicherheitsgründen müßte eine große Menge von Kältemittel verwendet werden, da ein Austritt von Heißwasser und/oder Dampf mit Temperaturen im Bereich der Siedetemperatur das Arbeitspersonal erheblich gefährden würde.

Hierbei ist zu beachten, daß die Kälteleistung stets größer sein muß, als die laufende Wärmezufuhr. Es versteht sich, daß die Probleme mit größeren Leitungsdurchmessern zunehmen, weil der Wärmeabfluß zum Einfrieren und zur Erhaltung des Eispfropfens zunehmend erschwert wird.

Die Rohrleitung 1 ist von einer im wesentlichen zylindrischen Manschette 2 aus einem schlecht Wärme leitenden Metall wie Edelstahl mit einer Achse A-A umgeben, die mit der Rohrachse zusammen fällt und aus einer jeweils einteiligen unteren sektorförmigen Halbschale 3 und einer oberen sektorförmigen Halbschale 4 besteht, die durch eine nicht gezeigte Gripp-Zange zusammen gehalten werden. Eine Trennfuge T liegt in der Rohrachse und verläuft in Figur 1 senkrecht zur Zeichenebene. Die Manschette 2 ist in Längsrichtung durch innere Trennwände 3a und 3b bzw. 4a und 4b unterteilt, wodurch eine Hauptkammer 5 und zwei Endkammern 6 und 7, also drei Kammern, gebildet werden. Der Druck in der Rohrleitung 1 wirkt in Richtung des Pfeils P. Die Hauptkammer 5 ist über eine Eintrittsöffnung 8 mit einem Absperrventil 8a an eine Kältemittelquelle angeschlossen, die z.B. flüssiges Kohlendioxid enthält.

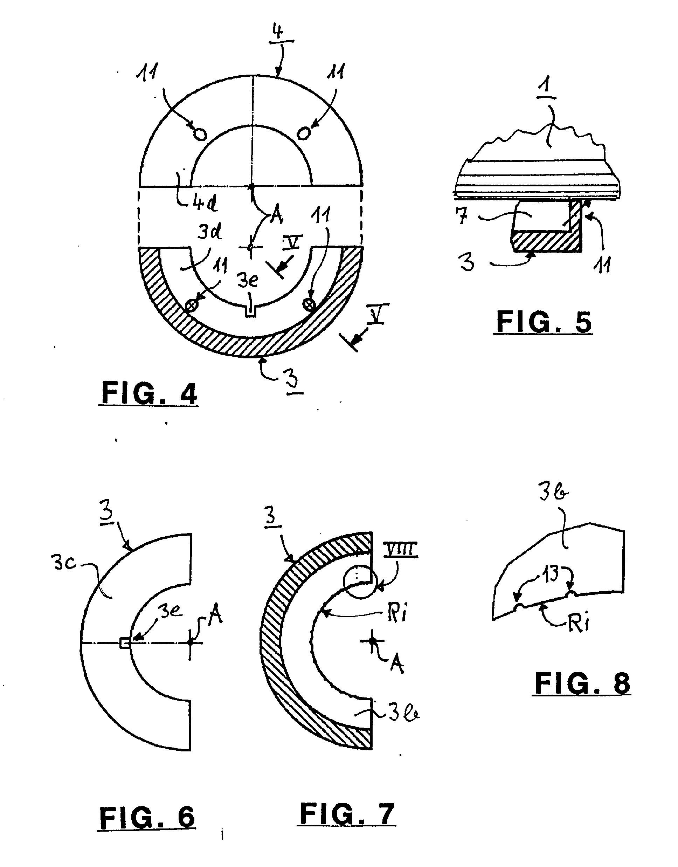

Die inneren Trennwände 3a, 3b und 4a, 4b sind als Kreisringsektoren ausgebildet, und durch eine Profilierung ihrer Innenradien Ri nach den Figuren 7 und 8 ist die Hauptkammer 5 unter Drosselwirkung mit den Endkammern 6 und 7 verbunden. Dadurch wird das Kältemittel unmittelbar über die Außenfläche der Rohrleitung 1 in die Endkammern 6 und 7 geleitet.

Die Endkammern 6 und 7 besitzen nach außen hin Außenwände 3c und 3d bzw. 4c und 4d, die gleichfalls als Kreisringsektoren ausgebildet sind, jedoch mit ihren Innenradien Ri zumindest weitgehend dicht an der Rohrleitung 1 anliegen. Die Schweißstelle hat man sich in Figur 1 im Abstand links von der Endkammer 6 vorzustellen. Um das Kältemittel von der Arbeitsperson fernzuhalten, ist die Endkammer 6 auf dem zylindrischen Umfang verteilt mit mehreren Austrittsöffnungen 9 versehen, die unter einem spitzen Winkel von z.B. 45 Grad von den Außenwänden 3c und 4c weg gerichtet sind. Das austretende, jetzt gasförmige Kältemittel ist durch die Strömungspfeile 10 angedeutet.

Gemäß den Figuren 4 und 5 sind die radialen Außenwände 3d und 4d der Endkammer 7 mit weiteren, auf den Umfang verteilten Austrittsöffnungen 11 versehen, die jedoch unter einem spitzen Winkel von beispielsweise 45 Grad auf die Achse A-A zu gerichtet sind, so daß das nunmehr gasförmige Kältemittel auf die Oberfläche der Rohrleitung 1 gelenkt wird, was besonders deutlich in Figur 5 gezeigt ist. Dadurch wird das Kältemittel besonders wirksam ausgenutzt.

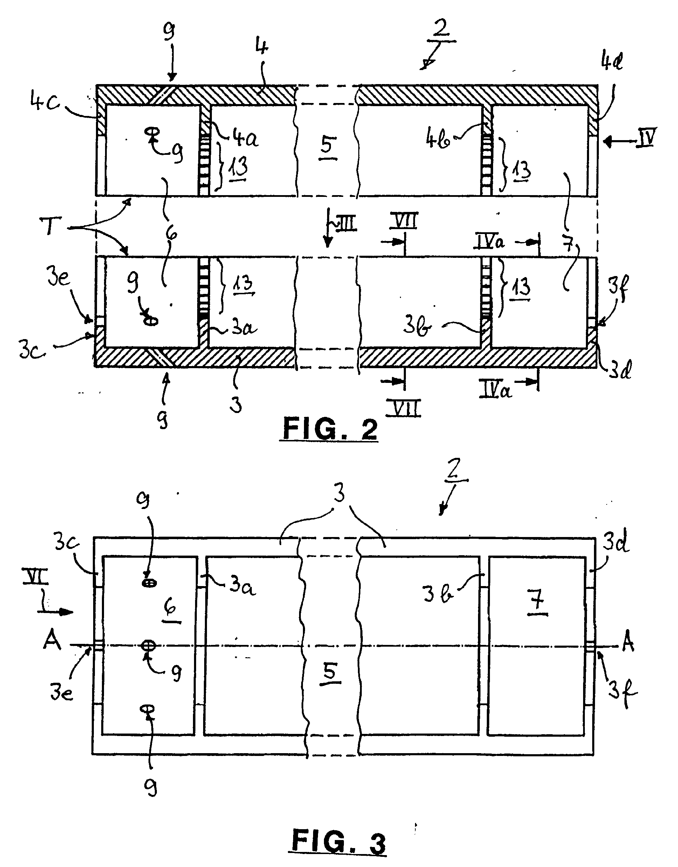

Wie Figur 1 zeigt, sind in die Endkammern 6 und 7 Temperaturfühler 12 eingesetzt, durch die überwacht werden kann, daß in den Endkammern die für das Einfrieren kritischen Temperaturen nicht überschritten werden. Zu diesem Zweck befinden sich in den Außenwänden 3c und 3d spaltförmige Ausnehmungen 3e und 3f, die in den Figuren 2, 3, 4 und 6 gezeigt sind.

Wie aus den Figuren 7 und 8 hervorgeht, ist der Innenradius Ri der inneren Trennwand 3b mit einer Profilierung in Form von äquidistant auf den Umfang verteilten Nuten 13 versehen. Das Gleiche gilt auch für die Innenradien der übrigen inneren Trennwände 3a sowie 4a und 4b. Dadurch wird erreicht, daß das Kältemittel beim übertritt von der Hauptkammer 5 in die Endkammern 6 und 7 in kleinstmöglichem Abstand und mit hoher Geschwindigkeit über die Oberfläche der Rohrleitung 1 geleitet wird.

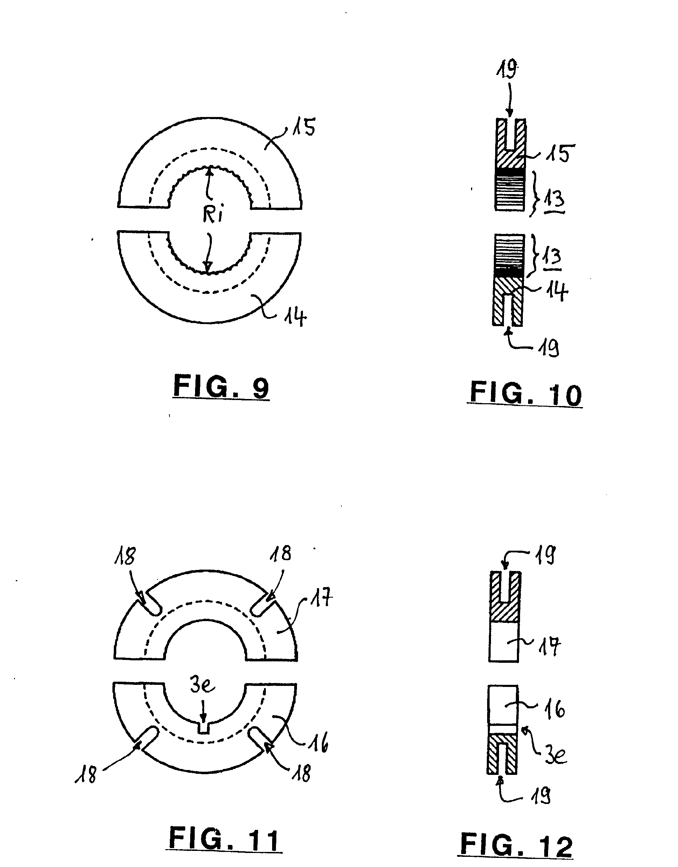

Die Figuren 9 und 10 zeigen zwei Einsatzstücke 14 und 15 für die inneren radialen Trennwände 3a/3b bzw. 4a/4b der Manschetten 2 nach Figuren 1. Auch hierbei sind die Innenradien Ri mit je einer Profilierung analog den Figuren 7 und 8 versehen.

Die Figuren 11 und 12 zeigen zwei Einsatzstücke 16 und 17 für die radialen Außenwände 3c/3d bzw. 4c/4d der Manschetten 2 nach den Figuren 1 und 9. Diese Einsatzstücke 16 und 17 sind mit radialen äußeren Nuten 18 versehen, die nach Lage und Verteilung den Austrittsöffnungen 11 in den Figuren 4 und 5 entsprechen. Zwar werden diese Nuten 18 für die linken Außenwände 3c und 4c nicht benötigt; sie sind in diesem Falle jedoch durch diese Außenwände 3c und 4c verschlossen.

Die Einsatzstücke 14, 15, 16 und 17 besitzen auf dem Außenumfang sektorförmige Nuten 19, mit denen sie nach Art von Reitern auf die entsprechenden radialen Wände aufgesetzt werden können, um die Manschetten nach den Figuren 1 und 9 an unterschiedliche Durchmesser der Rohrleitung 1 anpassen zu können ohne die Gesamtfunktion zu stören.

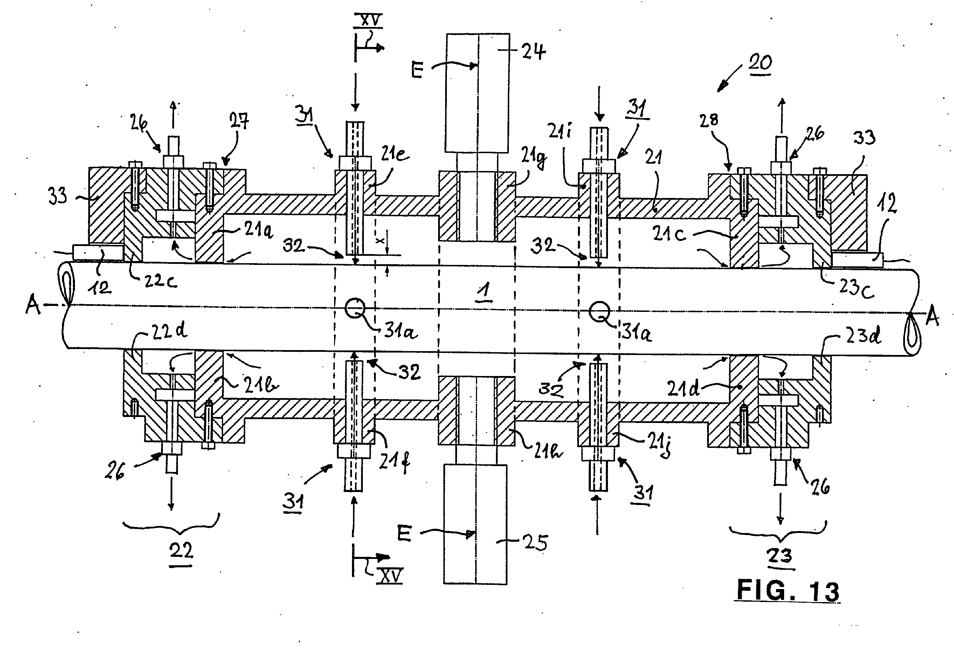

Die konstruktiven Details nach den Figuren 1 bis 12 können natürlich ganz oder Teilweise auf das nachfolgend beschriebene Ausführungsbeispiel nach den Figuren 13 bis 15 übertragen werden und umgekehrt.

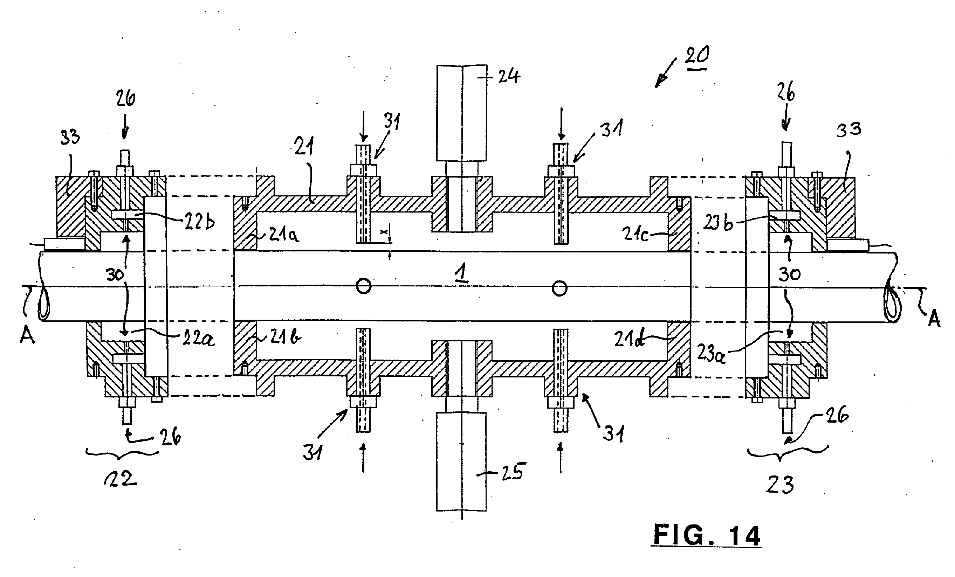

In den Figuren 13 und 14 ist eine Manschette 20 dargestellt, deren durch die Achse A-A verlaufende Trennfuge unter einem Winkel von 45 Grad zur Zeichenebene verläuft. Die Manschette 20 besitzt eine etwa zylindrische zweiteilige Hauptkammer 21 mit jeweils einstückig angeformten halbringförmigen Endwänden 21a, 21b und 21c, 21d, die paarweise miteinander fluchten und dicht aneinanderstoßen, aber gegenüber der Rohrleitung 1 enge Durchtrittsöffnungen freilassen, die entweder spaltförmig ausgebildet sind oder auf dem Umfang in feiner Verteilung abwechselnd Vorsprünge und Nuten aufweisen, wie dies weiter oben beschrieben ist. (Figuren 2, 7 und 8).

Dadurch kann verdampftes, ursprünglich flüssiges Kältemittel in Richtung der Pfeile in gleichfalls zweigeteilte Endkammern 22 und 23 entweichen, die an beiden Enden der Hauptkammer 21 koaxial und nach außen hin gasdicht angesetzt sind. Die Hauptkammer besitzt ferner halbringförmige Versteifungsrippen 21e, 21f; 21g, 21h und 21i, 21j, deren Umlaufkanten miteinander fluchten, was in Figur 13 durch die gestrichelten Verbindungslinien angedeutet ist. Durch die Endwände und die Versteifungsrippen erhält die Hauptkammer eine enorme Druckfestigkeit gegenüber dem Druck des verdampfenden Kältemittels.

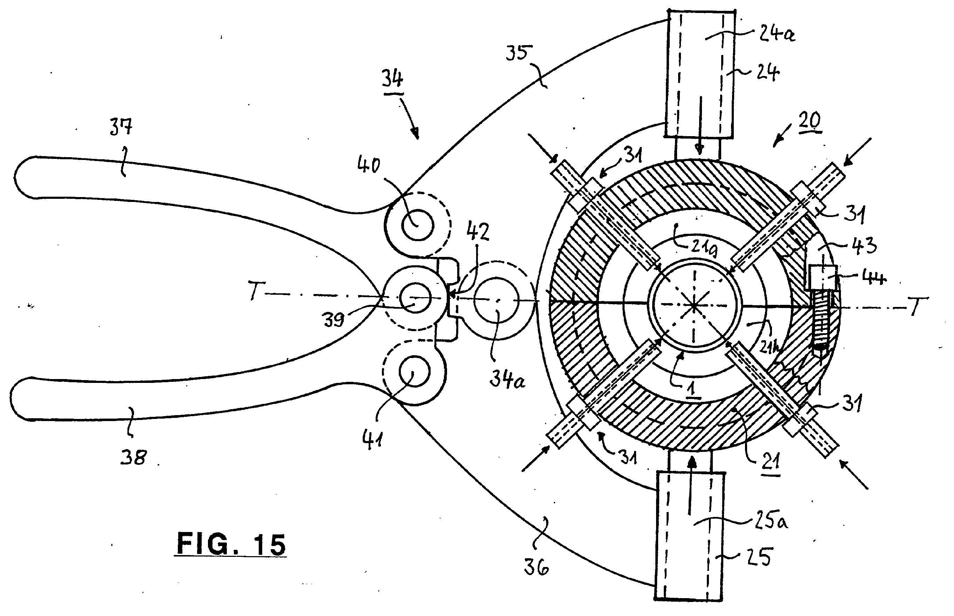

In die Hauptkammer 21 münden Düsen 31, deren Düsenmündungen 32 radial auf die Rohrleitung 1 ausgerichtet sind (Figur 15). Der Durchmesser der Düsenbohrungen beträgt etwa 0,5 mm, der Abstand der Düsenmündungen 32 von der Rohrleitung zwischen 1,0 und 10 mm, vorzugsweise zwischen 1,4 und 4 mm. Die Düsen 31 sind beiderseits einer radialen Mittenebene E-E der Hauptkammer 21 in zwei Düsenkränzen angeordnet, wobei jeder Düsenkranz aus vier äquidistant auf den Umfang verteilten Düsen 31 besteht, von denen in den Figuren 13 und 14 jeweils nur ein diametral gegenüberliegendes Paar gezeigt ist. Die jeweils dazwischen liegenden Düsen sind durch Kreise 31a angedeutet und in Figur 15 gezeigt.

Als Kältemittel wird flüssiges Kohlendioxid verwendet, das in Richtung der äußeren Pfeile zugeführt wird. Diese nicht brennbare Verbindung hat eine kritische Temperatur von 31,06 °C und einen kritischen Druck von 73,83 bar, kann bei 20 °C unter einen Druck von 55,4 bar in flüssigem Zustand in Druckgasflaschen gehalten werden und hat eine Dichte D von 0,766. Beim Verdampfen entzieht es seiner Umgebung enorme Wärmemengen. Die enge Nachbarschaft der Düsenmündungen 32 zur Rohrleitung 1 hat folgende vorteilhafte Wirkung:

Das flüssige Kohlendioxid verhindert durch seine Spülwirkung die Bildung von isolierendem Kohlensäureschnee auf der Rohroberfläche und breitet sich in Umfangs- und Längsrichtung über die Rohroberfläche aus und entzieht der Rohrleitung die zum Einfrieren des Rohrinhalts (Wasser) erforderliche Wärme. Selbst das anschließend verdampfte Kohlendioxid entzieht der Rohrleitung noch in der Hauptkammer 21 weitere Wärme. Damit ist es möglich, Rohrleitungen 1 bis zu einem Nenndurchmesser von 60 mm, ggf. auch darüber, und einer stehenden Füllung mit Heißwasser bis bis 100 °C, je sogar bis 120 °C ohne in die Rohrleitung 1 eingeführte mechanische Verschlußstopfen sicher einzufrieren und den Eispfropfen auch in glatten Rohrleitungen 1 aus Edelstahl zuverlässig zu halten.

Die zugeführten Mengen des flüssigen Kältemittels und die Strömungsquerschnitte für das abströmende verdampfte Kältmittels werden dabei so gewählt, daß in der Hauptkammer ein Druck bis zu 60 bar, vorzugweise zwischen 20 und 50 bar aufgebaut und über eine ausreichende Zeit gehalten wird, bis sich ein Eispfropfen ausreichender Festigkeit gegen axiale Verschiebung gebildet hat. Der hohe Innendruck sorgt zusätzlich zur unmittelbaren Wirkung des flüssigen Kältemittels auf die Rohrleitung 1 für einen sehr hohen Wärmeübergang an das bereits verdampfte Kältemittel.

Die Endkammern 22 und 23 sind über gasdichte, rotatationssymmetrische und etwa Z-förmige Trennfugen 27 und 28 an beiden Enden an die Hauptkammer 21 mittels Verschraubungen lösbar und koaxial angesetzt. Jede der wiederum rotationssymmetrisch ausgebildeten Endkammern 22 und 23 besitzt eine ringförmige Ausdrehung 22a bzw. 23a, die zur Rohrleitung 1 hin offen ist, und einen konzentrischen Einstich 22b bzw. 23b, die durch je einen Kranz von radialen Öffnungen 30 miteinander verbunden sind (Figur 14). Die äußeren Enden der Endkammern besitzen wiederum halbringförmige Außenwände 22c, 22d und 23c, 23d, die gegenüber der Rohrleitung 1 enge Durchtrittsöffnungen freilassen, die entweder spaltförmig ausgebildet sind oder auf dem Umfang in feiner Verteilung abwechselnd Vorsprünge und Nuten aufweisen, wie dies gleichfalls weiter oben beschrieben ist (Figuren 2, 7 und 8).

In angeschraubtem Zustand gemäß Figur 13 sind die Einstiche 22b und 23b durch die Endwände 21a, 21b und 21c, 21d der Hauptkammer 21 in Achsrichtung verschlossen. Die Einstiche 22b und 23b sind mit auf den Umfang verteilten radialen Öffnungen 26 versehen, mit denen es folgende Bewandtnis hat: Die Öffnungen 26 sind in eingesetzten Düsenkörpern untergebracht, die ähnlich den Düsen 31 ausgebildet sind. Durch die Öffnungen 26 kann wahlweise das aus der Hauptkammer 21 in Pfeilrichtung entwichene verdampfte Kältemittel an die Atmosphäre entweichen. Es ist aber andererseits auch möglich, an die Öffnungen 26 Schläuche für die Zufuhr frischen flüssigen Kältemittels aus Druckgasflaschen anzuschließen, wenn zum Einfrieren ein besonders großer Kältemittelbedarf erforderlich ist. Das gesamte verdampfte Kältemittel entweicht dann durch die beschriebenen Durchtrittsöffnungen im Bereich der halbringförmigen Außenwände 22c, 22d und 23c, 23d der Endkammern 22 und 23 an die Umgebung. Ein Kältemittelkreislauf ist also nicht erforderlich.

Der Einsatz mindestens einer Endkammer 22 und/oder 23 ist insbesondere dann zu empfehlen, wenn an der eingefrorenen Rohrleitung 1 in der Nähe der Manschette 20 Schweiß- oder Lötarbeiten durchgeführt werden, die einen zusätzlichen Wärmeeintrag in die Rohrleitung mit sich bringen.

Zur Temperaturkontrolle sind zweckmäßig auch hier Temperaturfühler 12 vorgesehen, wie dies im Zusammenhang mit Figur 1 beschrieben ist. Diese Temperaturfühler 12 sind - thermisch isoliert - über Winkelstücke 33 lösbar mit der jeweils zugehörigen Endkammer 22 und 23 verbunden; sie können wegen identischer Anschlußmaße aber auch mit den Enden der Hauptkammer 21 verbunden werden.

Die aus Halbschalen bestehende Manschette 20 wird - entweder mit oder ohne Endkammern 22, 23 über Druckstücke 24 und 25, die zu einer in Figur 15 gezeigten Spannvorrichtung 34 gehören, mit der Rohrleitung 1 verspannt. Die Figur 14 zeigt die in die Hauptkammer 21 einerseits und in die Endkammern 22 und 23 andererseits zerlegte Manschette 20 in axialer Explosionsdarstellung. Daraus ergibt sich auch, daß die Hauptkammer 21 bei entsprechender Kältemittelzufuhr auch ohne die eine oder andere Endkammer 22 oder 23 eingesetzt werden kann oder sogar ohne beide Endkammern. Sämtliche Komponenten bestehen aus hochfestem Stahl, vorzugsweise aus Edelstahl, und können auf ihren Außenflächen mit einem thermischen Isoliermaterial versehen, sein, was aber nicht zwingend erforderlich ist, da insbesondere Edelstahl ein schlechter Wärmeleiter ist.

In Figur 15 ist zusätzlich folgendes dargestellt: Die Spannvorrichtung 34 besteht aus zwei Spannbacken 35 und 36, die über einen Gelenkzapfen 34a miteinander verbunden sind. An den gelenkfernen Enden sind die Spannbacken 35 und 36 mit den Druckstücken 24 und 25 verbunden, in denen sich zur Einstellung der Abstände Gewindebolzen 24a und 25a befinden. Arretiermittel wie Kontermuttern sind der Einfachheit halber nicht dargestellt. Zwei Handhebel 37 und 38 sind über einen Gelenkzapfen 39 miteinander und in der Nähe des Gelenkzapfens 34a über zwei weitere Gelenkzapfen 40 und 41 mit den Spannbacken 35 und 36 verbunden.

Die Gelenkzapfen 39, 40 und 41 bilden ein Kniehebelsystem, das sich in gestreckter oder leicht durchgedrückter Lage selbst hält, wobei sich die Gelenkstelle mit dem Gelenkzapfen 39 an einem Anschlag 42 abstützt, der an einer der Spannbacken 35 oder 36 angeordnet ist. Beim Auseinanderziehen der Handhebel 37 und 38 öffnen sich die Spannbacken 35 und 36 mit jeweils entgegengesetztem Drehsinn und ziehen die beiden Halbschalen der Hauptkammer 21 - und soweit angebracht - auch der Endkammern 22 und 23 auseinander.

Das ganze System von Manschette 20 und Spannvorrichtung 34 ist spiegelsymmetrisch zu einer Ebene T-T ausgebildet, in der auch die Trennfuge der Manschette 20 liegt. Die eine Versteifungsrippe 21g ist im Bereich der Trennfuge mit einer Ausnehmung 43 und einer Bohrung versehen, durch die eine Spannschraube 44 in ein Gegengewinde der anderen Versteifungsrippe 21h eingeschraubt ist. Dadurch wird die Wirkung der Spannvorrichtung 34 verstärkt bzw. diese entsprechend entlastet.

Es ist ferner zu sehen, daß die vier Düsen 31 dieses Düsenkranzes um 45 Grad zur Trennfuge bzw. um 90 Grad zueinander ausgerichtet sind. Bei größeren Durchmessern der Rohrleitung 1 bis zu 120 mm und darüber kann es zweckmäßig sein, die Zahl der Düsen auf sechs oder acht pro Düsenkranz zu vergrößern.

### Beispiel:

Mit einer Vorrichtung nach den Figuren 13 und 15 mit zwei Düsenkränzen von je vier Düsen 31 wurde in einer Rohrleitung von 2 Zoll Nenndurchmesser bei einer anfänglichen Wassertemperatur von 120 °C ein Eispfropfen von ca. 20 cm Länge und einer Temperatur von -12 °C erzeugt. Die Einfrierzeit betrug 68 Minuten bei einem Verbrauch von 130 kg flüssigem Kohlendioxid. Dabei wurden in einer Entfernung von 35 cm vom Eispfropfen Schweißarbeiten an der Rohrleitung 1 durchgeführt. Derartige Arbeiten müssen spätestens nach 5 Jahren durchgeführt werden. Die Vorrichtung wurde vom TüV (Technischer überwachungsverein) abgenommen und zugelassen.

Bei der Stadt Ulm mit einer Netzlänge von 140 km Fernwärmeleitungen sind pro Monat 30 Schieberwechsel vorzunehmen. Beim Einfrieren mit flüssigem Stickstoff entstanden pro Einfriervorgang u.a. wegen des hohen Personalbedarfs für die Handhabung von Stickstoff Kosten von ca. EURO 1.500, also bei 30 Schieberwechseln Gesamtkosten in Höhe von EURO 45.000. Mit der erfindungsgemäßen Vorrichtung und der dadurch möglichen Verwendung von flüssigem Kohlendioxid reduzierten sich diese Kosten auf EURO 150 pro Einfriervorgang und die Gesamtkosten auf EURO 4.500, also auf 10 % der bisherigen Kosten.

### Bezugszeichenliste:

- 1: Rohrleitung
- 2: Manschette
- 3: Halbschale
- 3a: Trennwand
- 3b: Trennwand
- 3c: Außenwand
- 3d: Außenwand
- 3e: Ausnehmung
- 3f: Ausnehmung
- 4: Halbschale
- 4a: Trennwand
- 4b: Trennwand
- 4c: Außenwand
- 4d: Außenwand
- 5: Hauptkammer
- 6: Endkammer
- 7: Endkammer
- 8: Eintrittsöffnung
- 8a: Absperrventil
- 9: Austrittsöffnungen
- 10: Strömungspfeile
- 11: Austrittsöffnungen
- 12: Temperaturfühler
- 13: Nuten
- 14: Einsatzstück
- 15: Einsatzstück
- 16: Einsatzstück
- 17: Einsatzstück
- 18: Nuten
- 19: Nuten
- 20: Manschette
- 21: Hauptkammer
- 21a: Endwand
- 21b: Endwand
- 21c: Endwand
- 21d: Endwand
- 21e: Versteifungsrippe
- 21f: Versteifungsrippe
- 21g: Versteifungsrippe
- 21h: Versteifungsrippe
- 21i: Versteifungsrippe
- 21j: Versteifungsrippe
- 22: Endkammer
- 22a: Ausdrehung
- 22b: Einstich
- 22c: Außenwand
- 22d: Außenwand
- 23: Endkammer
- 23a: Ausdrehung
- 23b: Einstich
- 23c: Außenwand
- 23d: Außenwand
- 24: Druckstück
- 25: Druckstück
- 26: Öffnungen
- 27: Trennfuge
- 28: Trennfuge
- 30: Öffnungen
- 31: Düsen
- 31a: Kreise
- 32: Düsenmündungen
- 33: Winkelstücke
- 34: Spannvorrichtung
- 34a: Gelenkzapfen
- 35: Spannbacke
- 36: Spannbacke
- 37: Handhebel
- 38: Handhebel
- 39: Gelenkzapfen
- 40: Gelenkzapfen
- 41: Gelenkzapfen
- 42: Anschlag
- 43: Ausnehmung
- 44: Spannschraube
- A-A: Achse
- E-E: Mittenebene
- P: Pfeil
- Ri: Innenradius
- T: Trennfuge
- T-T: Ebene (Trennfuge)

## Patentansprüche

1. Vorrichtung zum Einfrieren von flüssigkeitsgefüllten Rohrleitungen (1) aus der Gruppe Heizungsrohre, Abzweigleitungen und Sanitärleitungen mit einer geteilten Manschette (2, 20), die eine Hauptkammer (5, 21) mit beidendigen radial fluchtenden Wänden mit mittigen Ausnehmungen aufweist, durch die die Rohrleitung (1) hindurchführbar ist, wobei die Hauptkammer (5, 21) mit mindestens einer Eintrittsöffnung für ein verdampfbares Kältemittel versehen ist und wobei die Wände gegenüber der Rohrleitung (1) mit Mitteln für die Leitung des aus der Hauptkammer (5, 21) austretenden verdampften Kältemittels über die Oberfläche der Rohrleitung (1) versehen sind, **dadurch gekennzeichnet, daß** die Manschette (2, 20) an mindestens einem Ende der Hauptkammer (5, 21) mit einer Endkammer (6, 7; 22, 23) versehen ist, durch die das an dem zugehörigen Ende der Hauptkammer (5, 21) austretende verdampfte Kältemittel in Berührung mit der Rohrleitung (1) hindurchführbar ist.

2. Vorrichtung nach Anspruch 1, **dadurch gekennzeichnet, daß** die mindestens eine Endkammer (6, 7; 22, 23) mit radial fluchtenden Außenwänden (3c/4c, 3d/4d; 22c/22d, 23c/23d) versehen ist, durch die die Rohrleitung (1) hindurchführbar ist.

3. Vorrichtung nach Anspruch 1, **dadurch gekennzeichnet, daß** die Außenwände (3c/4c, 3d/4d; 22c/22d, 23c/23d) der mindestens einen Endkammer (6, 7; 22, 23) gasdurchlässig an den Außendurchmesser der Rohrleitung (1) angepaßt sind.

4. Vorrichtung nach Anspruch 1, **dadurch gekennzeichnet, daß** die Hauptkammer (5, 20) und die mindestens eine Endkammer (6, 7; 22, 23) durch Halbschalen (3, 4) gebildet sind.

5. Vorrichtung nach mindestens einem der Ansprüche 1 bis 4, **dadurch gekennzeichnet, daß** die Halbschalen (3, 4) in den Bereichen der Hauptkammer (5) und der mindestens einen Endkammer (6, 7) zylindrisch ausgebildet sind.

6. Vorrichtung zum Einfrieren von flüssigkeitsgefüllten Rohrleitungen (1) aus der Gruppe Heizungsrohre, Abzweigleitungen und Sanitärleitungen mit einer geteilten Manschette (2, 20), die eine Hauptkammer (5, 21) mit beidendigen radial fluchtenden Wänden mit mittigen Ausnehmungen aufweist, durch die die Rohrleitung (1) hindurchführbar ist, wobei die Hauptkammer (5, 21) mit mindestens einer Eintrittsöffnung für ein verdampfbares Kältemittel versehen ist und wobei die Wände gegenüber der Rohrleitung (1) mit Mitteln für die Leitung des aus der Hauptkammer (5, 21) austretenden verdampften Kältemittels über die Oberfläche der Rohrleitung (1) versehen sind, **dadurch gekennzeichnet, daß** die Hauptkammer (5, 21) für den Eintritt von flüssigem Kältemittel mit auf den Umfang verteilten Düsen (31) mit Düsenmündungen (32) versehen ist, die auf die Rohrleitung (1) ausgerichtet sind.

7. Vorrichtung nach Anspruch 6, **dadurch gekennzeichnet, daß** die Düsen (31) in mindestens zwei Düsenkränzen beiderseits einer radialen Mittenebene (E-E) der Hauptkammer (5, 21) angeordnet sind und daß jeder Düsenkranz mindestens zwei Düsen (31) besitzt.

8. Vorrichtung nach Anspruch 7, **dadurch gekennzeichnet, daß** jeder Düsenkranz mindestens vier Düsen (31) besitzt, die paarweise diametral auf die Rohrleitung (1) ausgerichtet sind.

9. Vorrichtung nach mindestens einem der Ansprüch 6 bis 8, **dadurch gekennzeichnet, daß** die Düsenmündungen (32) einen Abstand "X" von der Rohrleitung (1) aufweisen, der zwischen 1,0 und 10 mm beträgt.

10. Vorrichtung nach Anspruch 9, **dadurch gekennzeichnet, daß** der Abstand "X" zwischen 1,4 und 4,0 mm beträgt.

11. Vorrichtung nach mindestens einem der Ansprüche 1 und 6, **dadurch gekennzeichnet, daß** die Hauptkammer (5, 21) für einen Gasdruck bis 60 bar ausgelegt ist.

12. Vorrichtung nach Anspruch 11, **dadurch gekennzeichnet, daß** die Hauptkammer zwischen ihren Endwänden (21a/21b, 21c/21d) mit teilringförmigen Versteifungsrippen (21e/21f, 21g/21h, 21i/21j) versehen ist.

13. Vorrichtung nach den Ansprüchen 6 und 12, **dadurch gekennzeichnet, daß** die Düsen (31) in radialer Richtung in die Versteifungsrippen (21e/21f, 21i/21j) eingesetzt sind.

14. Vorrichtung nach einem der Ansprüche 1 und 6, **dadurch gekennzeichnet, daß** die die Hauptkammer (5, 21) beidendig begrenzenden Wände (3a/4a, 3b/4b; 21a/21b, 21c/21d) als Halbringe ausgebildet und an ihren Innenradien (Ri) mit auf den Umfang verteilten Nuten (13) versehen sind, die den Durchtritt des Kältemittels in die mindestens eine Endkammer (6, 7, 22, 23) oder an die Atmosphäre ermöglichen.

15. Vorrichtung nach einem der Ansprüche 1 und 6, **dadurch gekennzeichnet, daß** die Manschette (2, 20) aus einem schlecht wärmeleitenden Metall besteht.

16. Vorrichtung nach Anspruch 15, **dadurch gekennzeichnet, daß** die Manschette (2, 20) aus einem Edelstahl besteht.

17. Vorrichtung nach einem der Ansprüche 1 und 14, **dadurch gekennzeichnet, daß** die mindestens eine Endkammer (6, 7; 22, 23) mit auf den Umfang verteilten Öffnungen (9, 26) für das Kältemittel versehen ist.

18. Vorrichtung nach mindestens einem der Ansprüche 1 bis 17, **dadurch gekennzeichnet, daß** in die Innendurchmesser der radialen Trennwände (3a/4a, 3b/4b), der radialen Endwände (21a/21b, 21c/21d) der Hauptkammer (5, 21) und der radialen Außenwände (3c/4c, 3d/4d; 22c/22d, 23c/23d) der Endkammern (6, 7; 22, 23) sektorförmige Einsatzstücke (14, 15, 16, 17) für die Anpassung an unterschiedliche Rohrleitungsdurchmesser einsetzbar sind.

19. Vorrichtung nach Anspruch 18, **dadurch gekennzeichnet, daß** die Innenradien (Ri) der Einsatzstücke (14, 15, 16, 17) für die Trennwände (3a/4a, 3b/4b), der radialen Endwände (21a/21b, 21c/21d) der Hauptkammer (5, 21) und die radialen Außenwände (3c/4c; 3d/4d; 22c/22d, 23c/23d) der Endkammern (6, 7; 22, 23) mit auf den Umfang verteilten Nuten (13) für die überleitung des Kältemittels von der Hauptkammer (5) in die mindestens eine Endkammer (6, 7; 22, 23) oder an die Atmosphäre versehen sind.

20. Vorrichtung nach einem der Ansprüche 1 und 6, **dadurch gekennzeichnet, daß** der Manschette (2, 20) an mindestens einem Ende ein Temperaturfühler (12) zugeordnet ist.

21. Vorrichtung nach einem der Ansprüche 1 und 6, **dadurch gekennzeichnet, daß** die innere Länge der Hauptkammer (5, 21) mindestens das 1,5-fache des Innendurchmessers der Hauptkammer (5, 21) beträgt.

22. Vorrichtung nach Anspruch 21, **dadurch gekennzeichnet, daß** die innere Länge der Hauptkammer (5, 21) mindestens das 3-fache des maximalen Außendurchmessers der umschließbaren Rohrleitung (1) beträgt.

23. Vorrichtung nach einem der Ansprüche 1 und 6, **dadurch gekennzeichnet, daß** die Hauptkammer (21) an beiden Enden halbringförmige fluchtende Endwände (21a/21b; 21c/21d) aufweist und an mindestens einem Ende über eine rotationssymmetrische Trennfuge (27, 28) lösbar mit einer Endkammer (22, 23) verbunden ist.

24. Vorrichtung nach Anspruch 23, **dadurch gekennzeichnet, daß** die Hauptkammer (21) an beiden Enden lösbar mit je einer Endkammer (22, 23) verbunden ist.

25. Vorrichtung nach Anspruch 23, **dadurch gekennzeichnet, daß** die mindestens eine Endkammer (22, 23) mit auf den Umfang verteilten Öffnungen (26) versehen ist, durch die wahlweise verdampftes Kältemittel aus der Hauptkammer (21) an die Atmosphäre abführbar oder frisches flüssiges Kältemittel aus einem angeschlossenen Kältemittelbehälter zuführbar ist.

26. Vorrichtung nach Anspruch 23, **dadurch gekennzeichnet, daß** die mindestens eine Endkammer (22, 23) mit einem zur Rohrleitung (1) konzentrischen Einstich (22b, 23b) versehen ist, der in Achsrichtung durch die radialen Außenwände (21a/21b; 21c/21/d) der Hauptkammer (21) verschlosen ist, aber in radialer Richtung zur Rohrleitung (1) Öffnungen (30) für das Kältemittel aufweist.

27. Vorrichtung nach den Ansprüchen 25 und 26, **dadurch gekennzeichnet, daß** die Öffnungen (26, 30) durch den jeweiligen Einstich (22b, 23b) miteinander verbunden sind.
